# EUROPEAN PATENT APPLICATION

(11) **EP 3 222 525 A1**
(43) Date of publication of application: **27.09.2017**
(21) Application number: 17161570.1
(22) Date of filing: 17.03.2017
(51) Int. Cl.: B64D 11/06, B60N 2/70

(54) **SEAT BACK COMPRISING AN INSERT**

(30) Priority: 18.03.2016 GB 201604653; 18.03.2016 GB 201604654; 18.03.2016 GB 201604655; 30.03.2016 GB 201605285
(71) Applicant: Acro Aircraft Seating Limited, Crawley, West Sussex RH11 0PR (GB)
(72) Inventor: Challenor, Adam, Crawley, West Sussex, RH11 0PR (GB); Hodgkinson, Alex, Crawley, West Sussex, RH11 0PR (GB); Conroy, Joseph, Crawley, West Sussex, RH11 0PR (GB)
(74) Representative: Sweetinburgh, Mark Roger

(57) **Abstract**

Described is a seat back (1) comprising a rear wall (2) bordered by side walls (3a, 3b) projecting forward from the rear wall. The rear wall and side walls define a cavity (4) in front of the rear wall and between opposing surfaces of the side walls. The seat back comprises an insert (5) disposed at least partially within the cavity which is for supporting the back of a person leaning against the front of the seat back. The seat back and insert are shaped such that when the insert is positioned within the cavity, movement of the insert towards the base of the seat back is restricted.

## Description

The present invention relates to seats, in particular to seat backs and seat back inserts for aircraft seats.

Various types of aircraft seat are known, which generally comprise a seat base, a seat back and one or more armrests. In order to satisfy airline requirements, it is beneficial to make aircraft seats lighter. It is also beneficial to minimise the time taken to assemble seats during manufacture and the time take to repair seats or replace parts thereof.

In order to meet safety requirements, the various components of a seat must be securely held together. A particular consideration relates to the cushioning material provided on the front face of a seat back. In this respect, when a passenger leans against a seat back, the passenger will exert a force on the cushioning which urges the cushioning to move downwards. This will, for example, be most pronounced when a passenger moves from an initial upright position to a more relaxed, or slumped, position within the seat. If the cushioning is not securely attached to the seat back, movement of the passenger's back against the seat back will tend to pull the cushioning down. This could cause obvious problems and safety issues, especially on an aircraft.

Whilst the cushioning could be glued to the seat back, this could then cause problems in the event that the cushioning requires replacement or repair. In order to sufficiently secure the cushioning in place, sufficient adhesion would be required which would then make removal of the cushioning very difficult, if not impossible.

An alternative approach is the use of mechanical fasteners. Whilst these do not add significant weight individually, when the number of fasteners used for each seat and the large number of seats present on an aircraft is taken into consideration, the unwanted weight is significant. Further, the time taken to install the cushioning using fasteners during manufacture/installation and the time taken to unfasten during disassembly for repair or fitting of replacement parts would also be considerable, especially considering the large number of seats often involved.

It is, therefore, an object of the present invention to seek to alleviate the above identified problems.

### SUMMARY OF THE INVENTION

According to one aspect of the present invention, there is provided a seat back, the seat back comprising a rear wall bordered by side walls projecting forward from the rear wall, said rear wall and side walls defining a cavity in front of the rear wall and between opposing surfaces of the side walls, wherein the seat back comprises an insert disposed at least partially within the cavity, said insert for supporting the back of a person leaning against the front of the seat back, wherein the seat back and insert are shaped such that when the insert is positioned within the cavity, movement of the insert towards the base of the seat back is restricted.

Preferably, movement of the insert towards the base of the seat back is prevented.

Preferably, the side walls are part of a perimeter wall projecting forward from the rear wall, said rear wall and perimeter wall defining the cavity in front of the rear wall and between opposing surfaces of the perimeter wall.

Preferably, the width of the cavity and the insert tapers from a first width to a second width, wherein the first width is positioned above the second width and wherein the first width is greater than the second width.

In this respect, it will be appreciated that the width of the cavity is defined by the distance between opposing side walls of the seat back.

Preferably, the insert fits snugly within the cavity.

Remarkably, the present invention provides a seat back with an insert disposed within a cavity of the seat back, wherein the insert is secured within the cavity by a "geometric lock". That is, no mechanical fasteners or connectors are required; rather the insert is simply inserted into the cavity of the seat back and engages with the side walls of the seat back in such a way that downward movement of the insert within the cavity is prevented.

Once the insert has been correctly positioned, an outer fabric layer can be positioned over the insert and secured to the seat back to complete the forward facing surface of the seat back.

Preferably, the insert comprises a deformable material.

Preferably, the insert comprises a resilient material.

Preferably, the insert comprises foam.

Preferably, the width of the cavity and the insert tapers from a first width positioned within an upper part of the cavity and insert to a second width below the first width.

Preferably, the first width is at least about 10% greater than the second width, preferably at least about 15%, preferably at least about 18%, preferably about 18%.

Preferably, the second width of the cavity and insert is positioned in a central part and/or lower part of the cavity and insert.

Preferably, the seat back comprises one or more shaped profiles for mutual engagement with one or more shaped profiles of the insert, wherein said shaped profiles are for restricting, preferably preventing, downward movement of the insert relative to the seat back when the insert is positioned within the cavity.

Preferably, the seat back comprises one or more recesses for engagement with one or more protrusions on the insert and for restricting, preferably preventing, downward movement of the insert relative to the seat back when the insert is positioned within the cavity.

Preferably, the seat back comprises a recess in a forward facing surface thereof for engagement with a protrusion on the insert.

Preferably, the seat back comprises a recess in a forward facing surface of the perimeter wall for engagement with a protrusion on the insert.

Preferably, the seat back comprises a recess in a forward facing surface of its upper edge for engagement with a protrusion on the insert.

Preferably, each side wall comprises an upper part which is sloped from the or a setback position of the forward facing surface of the upper edge to the forward facing surface of the remainder of each side wall.

Preferably, the seat back comprises a recess in a forward facing surface of the upper wall of the perimeter wall for engagement with a protrusion of the insert.

Preferably, the forward facing surface of the perimeter wall is sloped from the or a setback position of the forward facing surface of the upper wall to the forward facing surface of each side wall of the perimeter wall.

Preferably, the insert is shaped to fit within the cavity between the side walls and to overlap the forward facing surface of the or an upper edge of the seat back.

Preferably, the insert is shaped to fit within the cavity between the side walls of the perimeter wall and to overlap the forward facing surface of the upper wall of the perimeter wall.

This is particularly advantageous because it means that the upper forward facing edge of the seat back is provided with additional cushioning on its forward facing surface. As a result, this increases comfort for a passenger in the event that they rest their head against said surface, whilst at the same time increasing the "geometric lock" of the insert within the cavity and the prevention of downward movement.

Preferably, the insert comprises one or more lateral tabs for engagement with the sloped forward facing surface of the perimeter wall or sloped forward facing surface of the side walls.

Preferably, the perimeter wall of a lower part of the seat back is substantially semi-circular.

Preferably, the lower part of the seat back is substantially semi-circular.

Preferably, the depth of the cavity is greater in a lower part than in an upper part of the seat back.

Preferably, the depth of the cavity is greater at the base of the seat back than in the upper part of the seat back.

Preferably, the depth of the perimeter wall is greater in the lower part than in the upper part of the seat back.

Preferably, the depth of the perimeter wall is greater at the base of the seat back than in the upper part of the seat back.

Preferably, the perimeter wall is provided around at least the side edges and upper edge of the rear wall.

Preferably, the perimeter wall is provided around substantially all of the rear wall.

Preferably, "around substantially all of the rear wall" means around at least about 90% of the rear wall, preferably, around at least about 95%, preferably at least about 98%, preferably at least about 99% of the rear wall.

Preferably, the perimeter wall is provided around all of the rear wall.

Preferably, the rear wall does not cross the space between opposing surfaces of the perimeter wall.

Preferably, the length of the insert is less than the length of the cavity.

Preferably, the base of the cavity is not filled by the insert. This allows part of the cushioning of the seat base of the seat to be positioned within the seat back cavity which provides structural advantages, for example by restricting or preventing removal or upward movement of the seat base cushioning when the insert is positioned within the cavity.

It is additionally advantageous for the base of the cavity to not be filled because it allows the seat base of the seat to be accommodated within the cavity when a user opts to recline the seat back. This is particularly the case in embodiments comprising a seat back that pivots about side connectors during recline causing the base of the seat back to move forward during recline.

Preferably, the insert comprises a recess, preferably a curved recess, in its bottom edge such that, when inserted into the cavity, the insert does not extend to the base of the cavity.

According to another aspect of the present invention, there is provided a seat comprising a seat back as described herein.

Preferably, the seat comprises a seat base, a seat frame and a seat back as described herein.

Preferably, the seat is a vehicle seat, preferably an aircraft seat.

According to a further aspect of the present invention, there is provided a row of seats comprising a plurality of seats as described herein.

It will be appreciated that reference to "one or more" includes reference to "a plurality".

Within this specification, the term "about" means plus or minus 20%, more preferably plus or minus 10%, even more preferably plus or minus 5%, most preferably plus or minus 2%.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

Example embodiments of the present invention will now be described with reference to the accompanying Figures, in which
Figures 1A and 1B show front views of the seat back and insert;
Figure 2A shows an exploded perspective view of the seat back and insert;
Figure 2B shows a perspective view of the seat back and insert with the insert positioned within the seat back of the cavity; and
Figure 3 shows a row of seats comprising seat backs of the present invention.

The present invention relates to a seat back, particularly to a seat back for an aircraft seat.

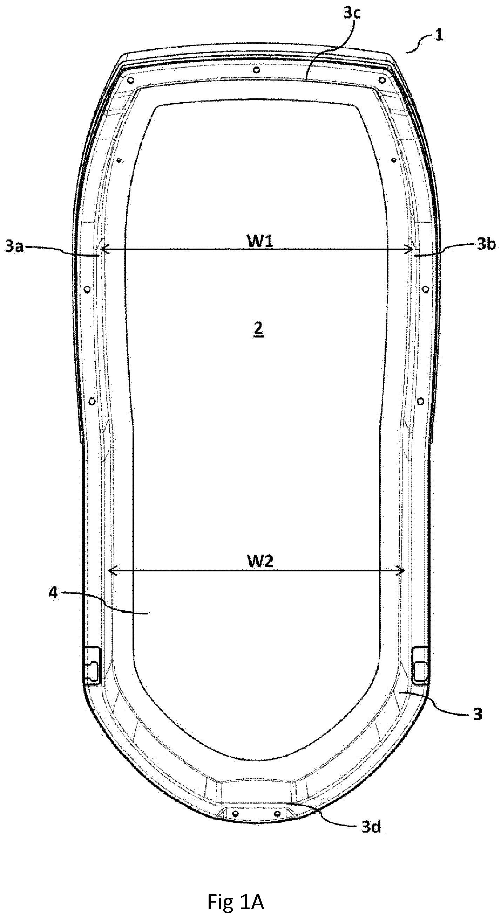

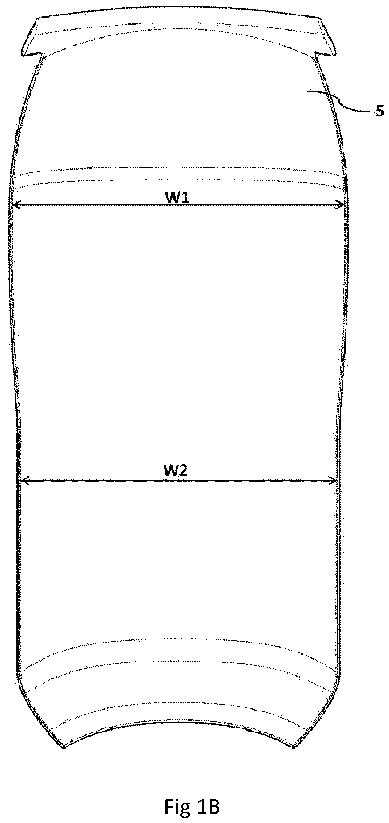

With reference to Figures 1A and 1B, there is shown a seat back 1 which comprises a rear wall 2 bordered by side walls 3a, 3b projecting forward from the rear wall 2. The rear walls 3a, 3b form part of a perimeter wall 3 positioned around the edge of the rear wall 2. In the example shown, the perimeter wall includes side walls, 3a, 3b, an upper wall 3c and a lower wall 3d. The rear wall 2 and side walls 3a, 3b define a cavity 4 in front of the rear wall 2 and between opposing surfaces of the side walls 3a, 3b. A resiliently deformable insert 5 is disposed within the cavity 4 and is provided for supporting the back of a person (not shown) leaning against the front of the seat back 1. Whilst it will be appreciated that various materials could be used, in the present example, the insert is made from a foam material.

The width of the cavity 4 and the insert 5 tapers from a first width *w1* in an upper part of the cavity/insert, to a second width *w2* in a lower part of the cavity/insert, with the first width *w1* positioned above the second width *w2* and the first width *w1* being greater than the second width *w2*. As a result, it will be appreciated that the cavity 4 and insert 5 are shaped such that when the insert 5 is positioned within the cavity 4, movement of the insert 5 towards the base of the seat back 1 is prevented. In the example shown, the insert 5 fits snugly within the cavity 4.

Remarkably, the present invention provides a seat back 1 with an insert 5 disposed within the cavity 4 of the seat back 1 and secured therein by a "geometric lock". That is, no mechanical fasteners or connectors are required; rather the insert 5 is simply inserted into the cavity 4 of the seat back 1 and engages with the side walls 3a, 3b of the seat back 1 in such a way that downward movement of the insert 5 within the cavity 4 is prevented.

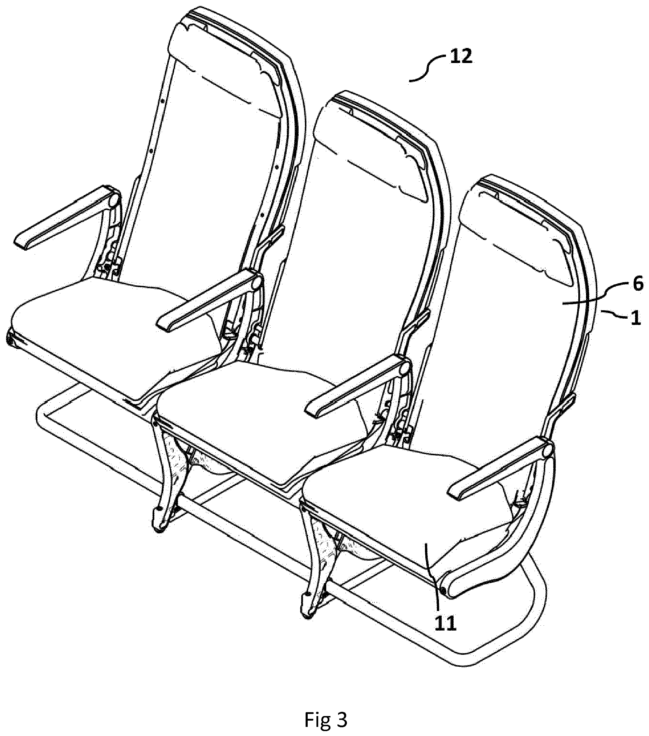

With reference to Figure 3, whilst the insert and associated geometry is no longer visible, once the insert 5 has been correctly positioned, an outer fabric layer 6 can be positioned over the insert 5 and secured to the seat back 1 to complete the forward facing surface of the seat back 1 and to hide the insert from the view.

The seat back 1 includes shaped profiles 7a, 7b for mutual engagement with shaped profiles 8a, 8b of the insert 5. The shaped profiles 7a, 7b, 8a, 8b are for preventing downward movement of the insert 5 relative to the seat back 1 when the insert 5 is positioned within the cavity. In the example shown, the shaped profiles 7a, 7b of the seat back take the form of sloped forward facing surfaces 7a, 7b of the perimeter wall 3 which slope forward from a setback position of the forward facing surface 9c of the upper wall 3c to the forward facing surface 9a, 9b of each side wall 3a, 3b.

The shaped profiles 8a, 8b of the insert 5 takes the form of tabs 8a, 8b for engagement with said forward facing surface 9c of the upper wall 3c and the slopes 7a, 7b.

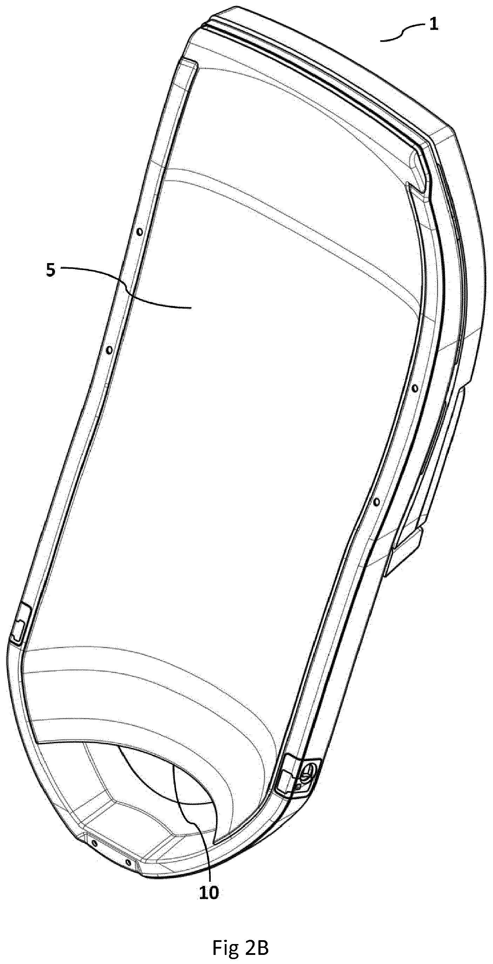

With particular reference to Figures 1A and 2B, the insert 5 is shaped to fit within the cavity 4 between the side walls 3a, 3b and to overlap the forward facing surface 9c of the upper wall 3c of the perimeter wall 3.

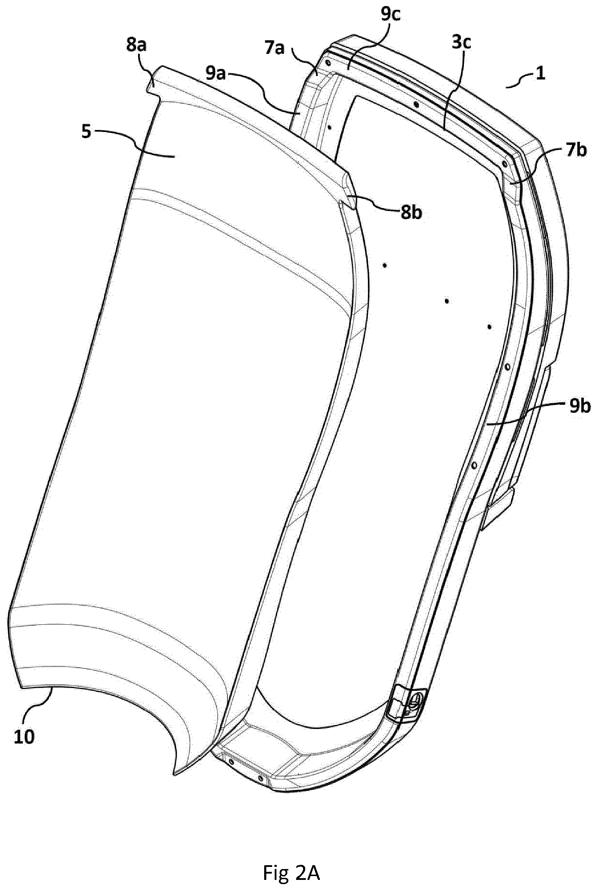

With reference to Figures 1A, 1B, 2A and 2B, the length of the insert 5 is less than the length of the cavity 4 and the insert 5 includes a curved recess 10. This means that the base of the cavity 4 is not filled by the insert 5 and so allows part of the cushioning of the seat base 11 of the seat 12 to be positioned within the seat back cavity 4. This provides structural advantages, for example by preventing removal or upward movement of the seat base cushioning 11 when the insert 5 is positioned within the cavity 4.

It is additionally advantageous for the base of the cavity 4 to not be filled because it allows the seat base 11 of the seat 12 to be accommodated within the cavity 4 when a user opts to recline the seat back 1. This is particularly the case in embodiments comprising a seat back 1 that pivots about side connectors during recline causing the base of the seat back to move forward during recline.

The present invention includes the following embodiments.
1. A seat back, the seat back comprising a rear wall bordered by side walls projecting forward from the rear wall, said rear wall and side walls defining a cavity in front of the rear wall and between opposing surfaces of the side walls, wherein the seat back comprises an insert disposed at least partially within the cavity, said insert for supporting the back of a person leaning against the front of the seat back, wherein the seat back and insert are shaped such that when the insert is positioned within the cavity, movement of the insert towards the base of the seat back is restricted.
2. A seat back according to embodiment 1, wherein the side walls are part of a perimeter wall projecting forward from the rear wall, said rear wall and perimeter wall defining the cavity in front of the rear wall and between opposing surfaces of the perimeter wall.
3. A seat back according to embodiment 1 or 2, wherein the width of the cavity and the insert tapers from a first width to a second width, wherein the first width is positioned above the second width and wherein the first width is greater than the second width.
4. A seat back according to any preceding embodiment, wherein the width of the cavity and the insert tapers from a first width positioned in an upper part of the cavity and insert to a second width below the first width.
5. A seat back according to embodiment 3 or 4, wherein the second width of the cavity and insert is positioned in a central part and/or lower part of the cavity and insert.
6. A seat back according to any preceding embodiment, wherein the seat back comprises one or more shaped profiles for mutual engagement with one or more shaped profiles of the insert, wherein said shaped profiles are for restricting downward movement of the insert relative to the seat back when the insert is positioned within the cavity.
7. A seat back according to any preceding embodiment, wherein the seat back comprises one or more recesses for engagement with one or more protrusions on the insert and for restricting downward movement of the insert relative to the seat back when the insert is positioned within the cavity.
8. A seat back according to any preceding embodiment, wherein the seat back comprises a recess in a forward facing surface thereof for engagement with a protrusion on the insert.
9. A seat back according to any of embodiments 2 to 8, wherein the seat back comprises a recess in a forward facing surface of the perimeter wall for engagement with a protrusion on the insert.
10. A seat back according to any preceding embodiment, wherein the seat back comprises a recess in a forward facing surface of its upper edge for engagement with a protrusion on the insert.
11. A seat back according to embodiment 10, wherein each side wall comprises an upper part which is sloped from the setback position of the forward facing surface of the upper edge to the forward facing surface of the remainder of each side wall.
12. A seat back according to any of embodiments 2 to 11, wherein the seat back comprises a recess in a forward facing surface of the upper wall of the perimeter wall for engagement with a protrusion of the insert.
13. A seat back according to embodiment 12, wherein the forward facing surface of the perimeter wall is sloped from the setback position of the forward facing surface of the upper wall to the forward facing surface of each side wall of the perimeter wall.
14. A seat back according to any preceding embodiment, wherein the insert is shaped to fit within the cavity between the side walls and to overlap the forward facing surface of the or an upper edge of the seat back.
15. A seat back according to any of embodiments 2 to 14, wherein the insert is shaped to fit within the cavity between the side walls of the perimeter wall and to overlap the forward facing surface of the upper wall of the perimeter wall for engagement with a protrusion of the insert.
16. A seat back according to any of embodiments 11 to 15, wherein the insert comprises one or more lateral tabs for engagement with the sloped forward facing surface of the perimeter wall or sloped forward facing surface of the side walls.
17. A seat back according to any of embodiments 2 to 16, wherein the perimeter wall of a lower part of the seat back is substantially semi-circular.
18. A seat back according to any preceding embodiment, wherein the lower part of the seat back is substantially semi-circular.
19. A seat back according to any preceding embodiment, wherein the depth of the cavity is greater in a lower part than in an upper part of the seat back.
20. A seat back according to any preceding embodiment, wherein the depth of the cavity is greater at the base of the seat back than in an upper part of the seat back.
21. A seat back according to any preceding embodiment, wherein the length of the insert is less than the length of the cavity.
22. A seat back according to any preceding embodiment, wherein the base of the cavity is not filled by the insert.
23. A seat back according to any preceding embodiment, wherein the insert comprises a recess in its bottom edge such that, when inserted into the cavity, the insert does not extend to the base of the cavity.
24. A seat back according to embodiment 23, wherein the insert comprises a curved recess in its bottom edge.
25. A seat back according to any of embodiments 3 to 24, wherein the first width is at least about 10% greater than the second width.
26. A seat back according to any preceding embodiment, wherein movement of the insert towards the base of the seat back is prevented.
27. A seat comprising a seat back according to any preceding embodiment.
28. A row of seats comprising a plurality of seats according to embodiment 27.
29. A seat according to embodiment 27 or row of seats according to embodiment 28, comprising an aircraft seat or seats.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A seat back, the seat back comprising a rear wall bordered by side walls projecting forward from the rear wall, said rear wall and side walls defining a cavity in front of the rear wall and between opposing surfaces of the side walls, wherein the seat back comprises an insert disposed at least partially within the cavity, said insert for supporting the back of a person leaning against the front of the seat back, wherein the seat back and insert are shaped such that when the insert is positioned within the cavity, movement of the insert towards the base of the seat back is restricted.

2. A seat back according to claim 1, wherein the side walls are part of a perimeter wall projecting forward from the rear wall, said rear wall and perimeter wall defining the cavity in front of the rear wall and between opposing surfaces of the perimeter wall.

3. A seat back according to claim 1 or 2, wherein the width of the cavity and the insert tapers from a first width to a second width, wherein the first width is positioned above the second width and wherein the first width is greater than the second width, optionally wherein the first width is at least about 10% greater than the second width, and/or wherein the second width of the cavity and insert is positioned in a central part and/or lower part of the cavity and insert.

4. A seat back according to any preceding claim, wherein the width of the cavity and the insert tapers from a first width positioned in an upper part of the cavity and insert to a second width below the first width, optionally wherein the second width of the cavity and insert is positioned in a central part and/or lower part of the cavity and insert.

5. A seat back according to any preceding claim, wherein the seat back comprises one or more shaped profiles for mutual engagement with one or more shaped profiles of the insert, wherein said shaped profiles are for restricting downward movement of the insert relative to the seat back when the insert is positioned within the cavity, and/or
wherein the seat back comprises one or more recesses for engagement with one or more protrusions on the insert and for restricting downward movement of the insert relative to the seat back when the insert is positioned within the cavity, and/or
wherein the seat back comprises a recess in a forward facing surface thereof for engagement with a protrusion on the insert.

6. A seat back according to any of claims 2 to 5, wherein the seat back comprises a recess in a forward facing surface of the perimeter wall for engagement with a protrusion on the insert.

7. A seat back according to any preceding claim, wherein the seat back comprises a recess in a forward facing surface of its upper edge for engagement with a protrusion on the insert, optionally wherein each side wall comprises an upper part which is sloped from the setback position of the forward facing surface of the upper edge to the forward facing surface of the remainder of each side wall.

8. A seat back according to any of claims 2 to 7, wherein the seat back comprises a recess in a forward facing surface of the upper wall of the perimeter wall for engagement with a protrusion of the insert, optionally wherein the forward facing surface of the perimeter wall is sloped from the setback position of the forward facing surface of the upper wall to the forward facing surface of each side wall of the perimeter wall.

9. A seat back according to any preceding claim, wherein the insert is shaped to fit within the cavity between the side walls and to overlap the forward facing surface of the or an upper edge of the seat back.

10. A seat back according to any of claims 2 to 9, wherein the insert is shaped to fit within the cavity between the side walls of the perimeter wall and to overlap the forward facing surface of the upper wall of the perimeter wall for engagement with a protrusion of the insert.

11. A seat back according to any of claims 7 to 10, wherein the insert comprises one or more lateral tabs for engagement with the sloped forward facing surface of the perimeter wall or sloped forward facing surface of the side walls.

12. A seat back according to any preceding claim, wherein the lower part of the seat back is substantially semi-circular, and/or
wherein the depth of the cavity is greater in a lower part than in an upper part of the seat back, and/or
wherein the depth of the cavity is greater at the base of the seat back than in an upper part of the seat back, and/or
wherein the length of the insert is less than the length of the cavity and/or wherein the base of the cavity is not filled by the insert, and/or
wherein the insert comprises a recess in its bottom edge such that, when inserted into the cavity, the insert does not extend to the base of the cavity, optionally wherein the insert comprises a curved recess in its bottom edge.

13. A seat comprising a seat back according to any preceding claim.

14. A row of seats comprising a plurality of seats according to claim 13.

15. A seat according to claim 13 or row of seats according to claim 14, comprising an aircraft seat or seats.
